# EUROPEAN PATENT APPLICATION

(11) **EP 3 722 971 A1**
(43) Date of publication of application: **14.10.2020**
(21) Application number: 19169091.6
(22) Date of filing: 12.04.2019
(51) Int. Cl.: G06F 16/438, G06F 16/638

(54) **GRAPHICAL USER INTERFACE FOR DYNAMICALLY CREATING AND ADJUSTING PLAYLISTS**

(71) Applicant: Moodagent A/S, 1120 Copenhagen K (DK)
(72) Inventor: Henderson, Mikael, 1120 Copenhagen K (DK); Steffensen, Peter Berg, 1120 Copenhagen K (DK); Gelineck, Steven, 1120 Copenhagen K (DK); Sørensen, Rasmus, 1120 Copenhagen K (DK); Hommelgaard, Lisa, 1120 Copenhagen K (DK)
(74) Representative: Nordic Patent Service A/S

(57) **Abstract**

A method, device (1) and system (15) for organizing media content on a computer-based system to form a playlist, wherein the device (1) has access to a database (3) with a plurality of media content items (4) and associated feature vectors comprising values (6A) representing different characteristics of a media content item (4). A GUI (8) displayed on the device (1) comprises GUI elements (9), each representing a variable (7) associated with one or more of the vector values (6A). A user interaction with one of the GUI elements (9) is interpreted as a change in the variable (7) and, in response, a queue of selectable items (11) ordered according to their associated feature vectors with respect to the changed variable (7) is displayed on the GUI (8) .

## Description

### TECHNICAL FIELD

The disclosure relates to organizing and playback of media content, such as music files. In particular, the embodiments described herein relate to methods and devices for dynamic creation and adjustment of music playlists with the use of graphical user interface elements.

### BACKGROUND

As computer technology has improved, the digital media industry has evolved greatly in recent years. Users are able to use electronic devices such as mobile communication devices (e.g., cellular telephones, smartphones, tablet computers, etc.) to consume music, video and other forms of media content. For instance, users can listen to audio content (e.g., music) or watch video content (e.g., movies, TV broadcasts, etc.) on a variety of electronic devices.
At the same time, advances in network technology have increased the speed and reliability with which information can be transmitted over computer networks. It is therefore possible for users to stream media content over computer networks as needed, or on demand, rather than receiving a complete file (on a physical CD, DVD, or downloading the entire file) before consuming the media content.
Online media streaming services exploit these possibilities by allowing users to browse large collections of media content using their electronic devices. As a result, online users today face a daunting volume of media content and choosing from this enormous volume of content can be challenging. There is therefore an increasing demand from users to be able to quickly find the most relevant media content to consume on online media streaming services.

One way to offer interesting or relevant media content for the users is to use automatic media recommendation systems, thus saving the users from manually filtering out the unrelated content and ranking the most interesting media content items based previously defined user preferences.
The problem with this approach is that the user preferences are defined mostly based on the service usage and interactions of the users or their social circles (using e.g. Collaborative Filtering), or using other statistical methods based on usage data collection and analysis. Furthermore, when users first start to use a service they will have no information that could be extracted from their profiles regarding their interests, and even later on the gathered information can be incomplete, inaccurate, or in other ways misleading, thus resulting in recommendations that users will find useless or even annoying.

Another approach is to offer a selection of media content (e.g. in the form of a playlist) based on a seed media item selected by the user. Electronic devices are often equipped with a touch-sensitive display screen associated with a graphical user interface that enables display and selection of such media content items from a list.
However, due to the dimensional limitations of such display screens, even with a scrolling behaviour implemented, only a limited amount of media content items can be presented to select from. This presented list is usually based on automatically derived user preferences, which carries the same problems as explained above.

Further techniques have also been implemented for accessing and playing music using electronic devices. These techniques are however generally cumbersome and inefficient. For example, accessing music for playback may require navigating a complex and time-consuming user interface. Therefore, these existing techniques require more time than necessary, wasting user time and device energy. This latter consideration is particularly important in battery-operated devices, wherein battery power consumption is directly related to how long the display screen needs to be turned on.

Furthermore, users often have an unspecific wish for hearing a particular type of music that depends on their mood (e.g. happy, sad, angry) or circumstances (e.g. workout, commute, relaxing, sensual). However, translating the mood or circumstances of a user to a playlist is a difficult technical problem. In particular, it is difficult to provide a user interface that allows for simple instructions that result in a dynamically adjusted playlist that corresponds to the wishes of the user, i.e. to the mood or circumstances of the user.

Accordingly, there is a need for electronic devices with faster, more efficient methods and user interfaces for accessing and playing media content that corresponds to the actual mood or circumstances of a user. Such methods and interfaces optionally complement or replace conventional methods and can thus reduce the cognitive burden on a user and produce a more efficient human-machine interface. For battery-operated computing devices, such methods and interfaces conserve power and increase the usage time between battery charges.

### SUMMARY

It is an object to provide a method and system for organizing media content using a computer-based system and thereby solving or at least reducing the problems mentioned above.

The foregoing and other objects are achieved by the features of the independent claims. Further implementation forms are apparent from the dependent claims, the description and the figures.

According to a first aspect, there is provided method of organizing media content on a computer-based system to form a playlist, the method comprising:
providing a server device, and a client device in data communication with the server device;
providing, on the server device, a database comprising a plurality of media content items, each of the media content items having associated therewith a feature vector *V_{f}* comprising a number *n* of feature values, each of the feature values representing one characteristic of the media content item concerned;
displaying, on a display screen of the client device, a graphical user interface, GUI, comprising a number *m* of GUI elements, each of the GUI elements graphically representing a variable associated with one or more of the feature values;
the number *m* of GUI elements being less than the number *n* of feature values;
detecting, through an input interface of the client device, a user interaction with one of the GUI elements;
determining, on the client device, an input vector *Vᵢ* comprising input values based on the user interaction;
communicating the input vector *Vᵢ* to the server device;
determining, on the server device, a playlist of the plurality of media content items based on the distance of the associated feature vector *V_{f}* of each media content item from the input vector *Vᵢ* in the vector space; and
displaying, on the GUI of the client device, as a direct response to the user interaction, a queue of selectable items according to the playlist.

With this method it becomes possible for users to generate playlists from a large (and possibly constantly changing) volume of accessible media content items that corresponds to their mood and circumstances, in a quick and efficient manner, without needing to navigate a complex and time-consuming user interface, using only a few GUI elements on a display screen. Thus, the method ultimately enables users not only to achieve a better user experience on their existing devices, but also to conserve power and increase the usage time of their device between battery charges, without the need of changing or upgrading any of the hardware elements.
Furthermore, the use of associated feature vectors reduces the required data usage when communicating between the server (of a streaming service provider) and the client device (smartphone with a streaming application), thereby achieving savings on both costs, response time, and network load. The latter may become especially relevant when mobile networks are being used for data communication between the server and the client device.
In addition, providing these feature vectors for the media content items enables an additional layer of abstraction as well as data compression, since these feature vectors can represent similarities or differences between media content items in an abstract vector space. Calculating similarity using these reduced size feature vectors enables more efficient processing without sacrificing the accuracy or relevancy of results.

In a possible implementation form of the first aspect one or more of the input values of the input vector *Vᵢ* are in direct correlation with the value of the variable, or the change in the value of the variable represented by the GUI element affected by the user interaction, wherein preferably the input values directly correspond to the feature values.
By establishing such a correlation between the values of the input vector and the variables calculations can be simplified, thus saving on both calculation times and battery power of the client device.

In a possible implementation form of the first aspect the number *m* of GUI elements comprises a number *nₛ* of gradual adjustment elements movable between two end positions; wherein the position of a gradual adjustment element relative to its end positions represents the value of the variable represented by the gradual adjustment element; wherein
the gradual adjustment elements comprise at least one of a slider movable by dragging between two end points along a vertical or horizontal axis, or a rotatable knob movable by rotating clockwise or counter-clockwise between two extreme positions; and wherein the user interaction results in moving at least one of the gradual adjustment elements to a new position.
Using sliders and knobs provides an efficient, simple and user-friendly way of adjusting variable values, and ultimately the resulting playlist.

In a possible implementation form of the first aspect at least one of the number *nₛ* of gradual adjustment elements represents a variable that is associated with either exactly one feature value, or with a plurality of feature values.

In a possible implementation form of the first aspect the method further comprises:
initiating playback, on the client device, of one of the media content items from the queue of selectable items, and
adjusting each of the number *nₛ* of gradual adjustment elements to display variable values corresponding to the feature values of the feature vector *V_{f}* associated with the media content item being played back.
Adjusting the gradual adjustment elements to the current media item being played back provides visual feedback for the user regarding the feature values of the current media item, as well as a more precise representation of the characteristics of the respective media item.

In a possible implementation form of the first aspect the number *nₛ* of gradual adjustment elements is 1 ≤ *nₛ* ≤ 10, more preferably 1 ≤ *nₛ* ≤ 5, more preferably *nₛ* = 5.
The inventors arrived at the insight that selecting the number of gradual adjustment elements within these ranges is especially advantageous for users and provide a good balance between complexity of operation and simplicity of the user interface.

In a possible implementation form of the first aspect the method further comprises:
detecting the physical dimensions of the display screen of the client device, and
adjusting the number *nₛ* of the gradual adjustment elements to fit the limitations of the display screen.
Since display screens may be varying in dimensions, adjusting the number of the gradual adjustment elements to fit the limitations of the display screen is especially advantageous to provide the best user experience but also a sufficient number of choices for users to adjust a playlist to their mood and circumstances.

In a possible implementation form of the first aspect the number m of GUI elements further comprises at least one quick button, and the method further comprises:
upon detecting user interaction with a quick button, adjusting a GUI element associated with the quick button to display a predetermined value of the variable represented by the GUI element; and
determining the input vector *Vᵢ* based at least partly on the predetermined value of the variable.

Adding a quick button to the GUI is a simple and effective way for users to quickly adjust a playlist by applying an extreme value of a variable, without the need to e.g. turn a knob or drag a slider to the desired position.

In a possible implementation form of the first aspect adjusting the GUI element associated with the quick button alternatingly changes between two predetermined values of the variable upon repeated detection of user interaction with the same quick button.
Applying this behavior of the quick button provides an intuitive way for users to achieve quick operation through the GUI and a better way to experiment with results of applying extreme variable values to generate a playlist.

In a possible implementation form of the first aspect the number *m* of GUI elements comprises at least one interactive reference to at least one of the plurality of media content items; and wherein determining the input vector *Vᵢ* comprises identifying a seed media content item closest associated with the interactive reference selected via the user interaction, and assigning the feature values of the feature vector *V_{f}* of the seed media content item as the input values of the input vector *Vᵢ*.
Adding the option to select an interactive reference to at least one of the plurality of media content items on the GUI provides further complexity, while still keeping the GUI relatively simple and intuitive.

In a possible implementation form of the first aspect the interactive reference is one of a textual reference to a piece of metadata directly associated with at least one of the plurality of media content items (such as artist name, track title, music genre, tag, release date); a graphical or textual reference to a user ID (such as a profile picture or username), wherein the user ID is associated with at least one of the plurality of media content items; a graphical reference to a location (such as a region of an interactive map), wherein the location is associated with at least one of the plurality of media content items; or a textual reference indirectly associated with at least one of the plurality of media content items (such as a brand name, an ideology, or a title of a book, a movie, or a TV show).
Adding these options to the GUI provides users with the ability to customize a playlist according to certain requirements that would not be possible by using previously available methods (or by using previously mentioned GUI elements) such as specifying a certain location, or a title of a movie, and applying these criteria to the dynamically generated playlist.

In a possible implementation form of the first aspect the number *n* of feature values is 1 ≤ *n* ≤ 256, more preferably 1 ≤ *n* ≤ 100, more preferably 1 ≤ *n* ≤ 34; wherein each of the feature values and input values is preferably an integer number, more preferably a positive integer number, most preferably a positive integer number with a value ranging from 1 to 7.
The inventors arrived at the insight that selecting the number of feature values and their numerical value from within these ranges ensures that the data used for further processing is sufficiently detailed while also compact in data size in order to allow for efficient processing.

In a possible implementation form of the first aspect the characteristic represented by a feature value is one of
a perceived musical characteristic corresponding to the style, genre, sub-genre, rhythm, tempo, vocals, or instrumentation of the respective media content item;
a perceived emotional characteristic corresponding to the mood of the respective media content item; or
an associated characteristic corresponding to metadata, online editorial data, geographical data, popularity, or trending score associated with the respective media content item.
Providing feature vectors comprising such feature values that numerically represent these musical, emotional, and other associated characteristics enables a complex representation of these media content items while still having an efficiently small data size. Calculating similarity using these feature vectors enables efficient processing without sacrificing the accuracy or relevancy of results.

According to a second aspect, there is provided a device for organizing media content to form a playlist, the device having access to a database comprising a plurality of media content items, each of the media content items having associated therewith a feature vector *V_{f}* comprising a number *n* of feature values, each value representing one characteristic of the media content item concerned, the device comprising a display screen; and a processor being configured to display a graphical user interface, GUI, on the display screen, the GUI comprising a number *m* of GUI elements, each of the GUI elements graphically representing a variable associated with one or more of the feature values; wherein the number *m* of GUI elements is less than the number *n* of feature values; and wherein the processor is further configured to interpret a user interaction with one of the GUI elements as a change in the variable represented by the GUI element, and to display on the GUI, in response to the user interaction, a queue of selectable items ordered according to their associated feature vectors *V_{f}* with respect to the changed variable.

The described device enables users to generate a playlist from a large (and possibly constantly changing) volume of accessible media content items that corresponds to their mood and circumstances, in a quick and efficient manner, without needing to navigate a complex and time-consuming user interface, using only a few GUI elements on a display screen. Thus, it ultimately enables users not only to achieve a better user experience, but also to conserve power and increase usage time of a device.
Furthermore, the use of associated feature vectors reduces the required data usage when communicating with a server (of e.g. a streaming service provider), thereby achieving savings on both costs, response time, and network load. The latter may become especially relevant when mobile networks are being used for data communication with a server.
In addition, providing these feature vectors for the media content items enables an additional layer of abstraction as well as data compression, since these feature vectors can represent similarities or differences between media content items in an abstract vector space. Calculating similarity using these reduced size feature vectors enables more efficient processing without sacrificing the accuracy or relevancy of results.

In a possible implementation form of the second aspect the processor is configured to interpret a user interaction with one of the GUI elements as an input vector *Vᵢ*, wherein one or more of the input values of the input vector *Vᵢ* are in direct correlation with the value of the variable, or the change in the value of the variable represented by the GUI element affected by the user interaction; and to display on the GUI, in response to the user interaction, a queue of selectable items according to the distance of the associated feature vectors *V_{f}* of the media content items from the input vector *Vᵢ* in the vector space; wherein the input vector *Vᵢ* preferably comprises input values directly corresponding to the feature values of the feature vector *V*_{*f*.}
The use of such an input vector further simplifies calculations and data efficiency when communicating with a (streaming) server. Calculating a playlist on a (remote) server provides savings on computing power of the device of a user, which ultimately leads to further battery savings.

In a possible implementation form of the second aspect the number *m* of GUI elements comprises a number *nₛ* of gradual adjustment elements movable between two end positions; wherein the position of a gradual adjustment element relative to its end positions represents the value of the variable represented by the gradual adjustment element; wherein the gradual adjustment elements comprise at least one of a slider movable by dragging between two end points along a vertical or horizontal axis, or a rotatable knob movable by rotating clockwise or counter-clockwise between two extreme positions; and wherein the user interaction results in moving at least one of the gradual adjustment elements to a new position. Using sliders and knobs provides an efficient, simple and user-friendly way of adjusting variable values, and ultimately the resulting playlist.

In a possible implementation form of the second aspect at least one of the number *nₛ* of gradual adjustment elements represents a variable that is associated with either exactly one feature value, or with a plurality of feature values.

In a possible implementation form of the second aspect the processor is further configured to adjust each of the number *nₛ* of gradual adjustment elements, in response to a user selecting one of the media content items from the queue of selectable items, to display variable values corresponding to the feature values of the feature vector *V_{f}* associated with the selected media content item.
Adjusting the gradual adjustment elements to the current media item being played back provides visual feedback for the user regarding the feature values of the current media item, as well as a more precise representation of the characteristics of the respective media item.

In a possible implementation form of the second aspect the number *nₛ* of gradual adjustment elements is 1 ≤ *nₛ* ≤ 10, more preferably 1 ≤ *nₛ* ≤ 5, more preferably *nₛ* = 5, wherein the number *nₛ* of gradual adjustment elements is preferably adjusted to fit the limitations of the display screen.

The inventors arrived at the insight that selecting the number of gradual adjustment elements within these ranges is especially advantageous for users and provide a good balance between complexity of operation and simplicity of the user interface. Since display screens may be varying in dimensions, adjusting the number of the gradual adjustment elements to fit the limitations of the display screen is especially advantageous to provide the best user experience but also a sufficient number of choices for users to adjust a playlist to their mood and circumstances.

In a possible implementation form of the second aspect the number m of GUI elements comprises at least one quick button; wherein the processor is further configured to, upon detecting user interaction with a quick button, adjusting a GUI element associated with the quick button to alternatingly display one of two predetermined values of the variable represented by the GUI element, wherein the alternating is based on detecting repeated user interaction with the same quick button.
Adding a quick button to the GUI is a simple and effective way for users to quickly adjust a playlist by applying an extreme value of a variable, without the need to e.g. turn a knob or drag a slider to the desired position. Applying this behavior of the quick button provides an intuitive way for users to achieve quick operation through the GUI and a better way to experiment with results of applying extreme variable values to generate a playlist.

In a possible implementation form of the second aspect the number m of GUI elements comprises at least one interactive reference to at least one of the plurality of media content items; wherein the processor is further configured to identify, upon detecting a user interaction with an interactive reference, a seed media content item closest associated with the interactive reference, and to order the media content items to be displayed in a queue on the GUI according to their similarity to the seed media content item based on their associated feature vectors *V*_{*f*.}
Adding the option to select an interactive reference to at least one of the plurality of media content items on the GUI provides further complexity, while still keeping the GUI relatively simple and intuitive.

In a possible implementation form of the second aspect the interactive reference is one of a textual reference to a piece of metadata directly associated with at least one of the plurality of media content items (such as artist name, track title, music genre, tag, release date); a graphical or textual reference to a user ID (such as a profile picture or username), wherein the user ID is associated with at least one of the plurality of media content items; a graphical reference to a location (such as a region of an interactive map), wherein the location is associated with at least one of the plurality of media content items; or a textual reference indirectly associated with at least one of the plurality of media content items (such as a brand name, an ideology, or a title of a book, a movie, or a TV show).
Adding these options to the GUI provides users with the ability to customize a playlist according to certain requirements that would not be possible previously, such as specifying a certain location, or a title of a movie, and applying these criteria to the dynamically generated playlist.

In a possible implementation form of the second aspect the number *n* of feature values is 1 ≤ *n* ≤ 256, more preferably 1 ≤ *n* ≤ 100, most preferably 1 ≤ *n* ≤ 34; wherein each of the feature values and input values is preferably an integer number, more preferably a positive integer number, most preferably a positive integer number with a value ranging from 1 to 7; and wherein the characteristic represented by a feature value is one of a perceived musical characteristic corresponding to the style, genre, sub-genre, rhythm, tempo, vocals, or instrumentation of the respective media content item; a perceived emotional characteristic corresponding to the mood of the respective media content item; or an associated characteristic corresponding to metadata, online editorial data, geographical data, popularity, or trending score associated with the respective media content item.
The inventors arrived at the insight that selecting the number of feature values and their numerical value from within these ranges ensures that the data used for further processing is sufficiently detailed while also compact in data size in order to allow for efficient processing. In addition, providing feature vectors comprising such feature values that numerically represent these musical, emotional, and other associated characteristics enables a complex representation of these media content items while still having an efficiently small data size. Calculating similarity using these feature vectors enables efficient processing without sacrificing the accuracy or relevancy of results.

According to a third aspect there is provided a computer-based system for organizing media content to form a playlist, the system comprising:
a server device, having thereon provided a database comprising a plurality of media content items, each of the media content items having associated therewith a feature vector *V_{f}* comprising a number *n* of feature values, each of the feature values representing one characteristic of the media content item concerned; and
a client device according to any one of the possible implementation forms of the second aspect, the client device being in data communication with the server device.
Providing such a computer-based system comprising both a client and a server device as described, in data communication with each other, whereby the database of media content items and their associated feature vectors are provided on the server enables an efficient and controlled operation of the whole system in order to provide a better user experience for the users of the client devices and to also conserve power and increase usage time of their device, while possibly reducing data communication load and response times between the client and server.

According to a fourth aspect there is provided a non-transitory computer readable medium storing instructions which, when executed by one or more processors, cause the one or more processors to perform a method according to any one of the possible implementation forms of the first aspect. Providing such instructions on a non-transitory computer readable medium enables users to download such instructions to their client device and achieve the advantages listed above without the need for any hardware upgrade of their device.

According to a fifth aspect there is provided a non-transitory computer readable medium storing instructions which, when executed by one or more processors, cause the one or more processors to display, on a display screen of a (client) device, a graphical user interface, GUI, according to the GUI of any one of the possible implementation forms of the second aspect.
Providing such instructions on a non-transitory computer readable medium enables users to download such instructions to their client device and achieve the advantages listed above without the need for any hardware upgrade of their device.

In a possible implementation form of the fifth aspect the one or more processors are part of the (client) device.
This setup enables the client device to directly apply instructions, e.g. instructions stored in a non-transitory computer readable medium on the storage of the device, using the processor, and thereby achieving efficiently the advantages listed above.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a flow diagram of a method of organizing media content to form a playlist in accordance with the first aspect using a device in accordance with the second aspect;
Fig. 2 illustrates the connection between graphical user interface elements and the input vector in accordance with a possible implementation form of the first aspect;
Fig. 3 illustrates the connection between graphical user interface elements and the input vector in accordance with a further possible implementation form of the first aspect;
Fig. 4 illustrates the connection between graphical user interface elements and feature vectors in accordance with a further possible implementation form of the first aspect;
Fig. 5 illustrates a further aspect of the graphical user interface elements in accordance with a further possible implementation form of the first aspect;
Fig. 6 illustrates a further aspect of the graphical user interface elements in accordance with a further possible implementation form of the first aspect;
Fig. 7 illustrates the connection between graphical user interface elements and the dimensions and/or orientation of the display screen in accordance with a further possible implementation form of the first aspect;
Fig. 8 illustrates the connection between different types of graphical user interface elements in accordance with a further possible implementation form of the first aspect;
Fig. 9 shows a flow diagram illustrating a method in accordance with a further possible implementation form of the first aspect;
Figs. 10A-10F show graphical user interfaces illustrating different graphical user interface elements in accordance with a further possible implementation form of the first aspect;

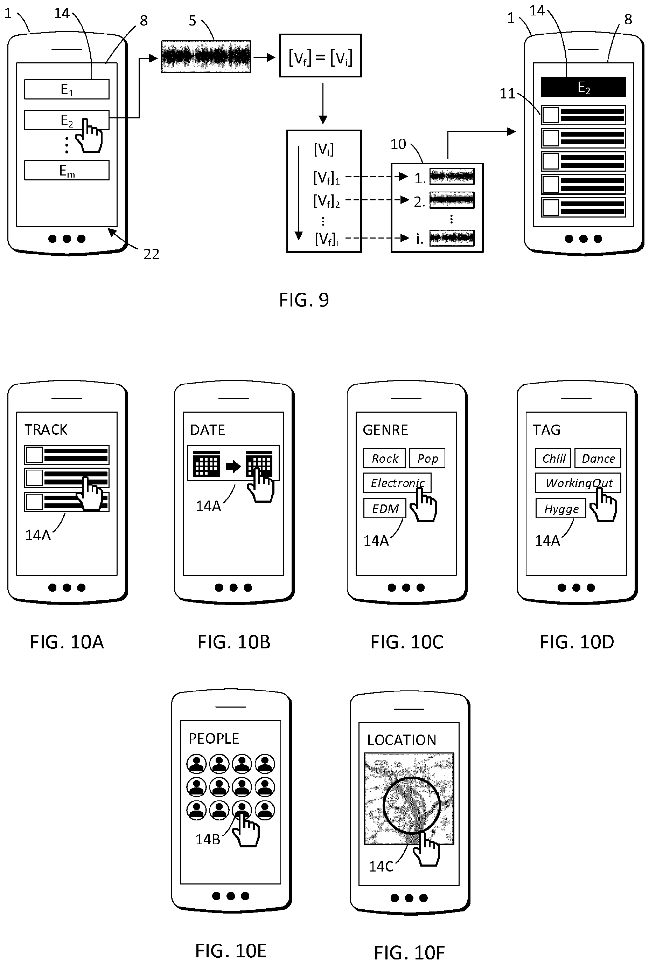

Fig. 10A and 10B shows illustrative representations of a user interface to be displayed by the display device illustrated on Fig. 9, in accordance with a possible implementation form of the second aspect.

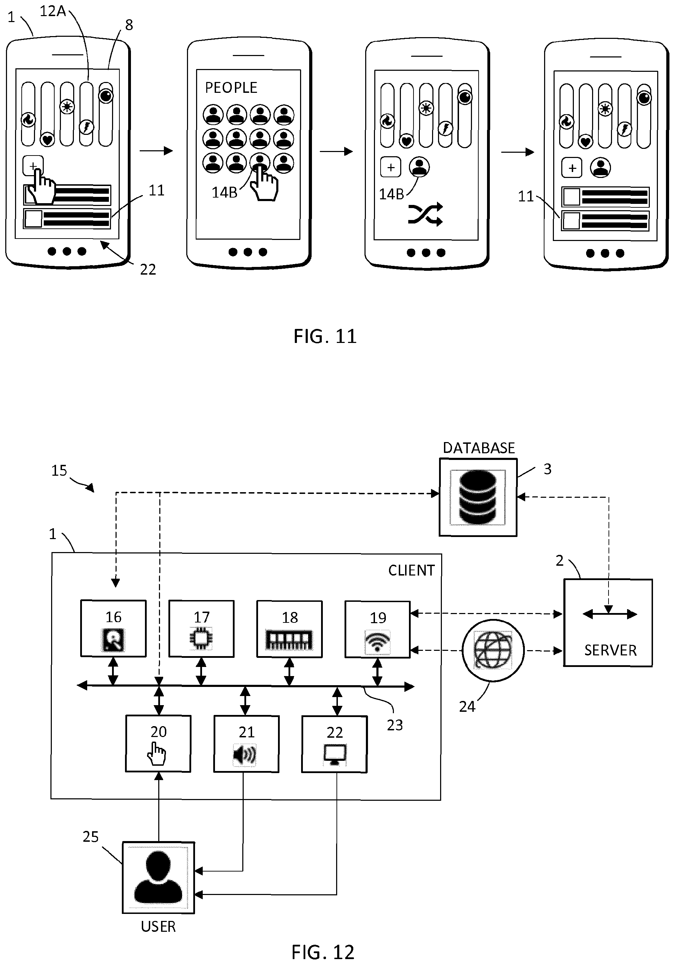

Fig. 11 shows a flow diagram illustrating a further aspect combining different graphical user interface elements in accordance with a further possible implementation form of the second aspect;
Fig. 12 shows a block diagram of a computer-based system in accordance with a possible implementation form of the third aspect.

### DETAILED DESCRIPTION

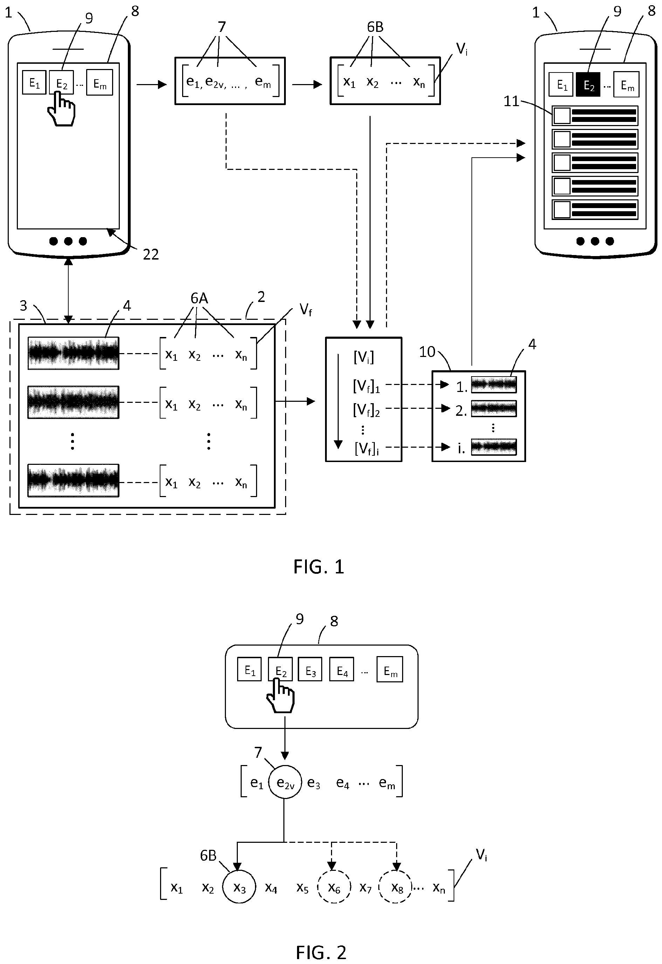

Fig. 1 shows a flow diagram of organizing media content to form a playlist in accordance with the present disclosure, using a computer-based system such as for example the system shown on Fig. 12.
In an initial step, a client device 1 is provided, having access to a database 3 comprising a plurality of media content items 4.
The term 'media content items' in this context is meant to be interpreted as a collective term for any type of electronic medium, such as audio or video, suitable for storage and playback on a computer-based system.
In some embodiments, the client device 1 is a desktop computer. In some embodiments, the client device 1 is portable (such as e.g. a notebook computer, tablet computer, or handheld device). In some embodiments, the client device 1 is user-wearable.
The database 3 can be provided on a remote server such as a server device 2, or on a local storage, such as the storage 16 of the client device 1.
Each of the media content items 4 have associated therewith a feature vector *V_{f}* comprising a number *n* of feature values 6A, whereby each value feature value 6A represents one characteristic of the media content item 4 concerned.
A 'vector' in this context is meant to be interpreted in a broad sense, simply defining an entity comprising a plurality of values in a specific order or arrangement.
In a possible embodiment a feature value 6A may represent a perceived musical characteristic corresponding to the style, genre, sub-genre, rhythm, tempo, vocals, or instrumentation of the respective media content item 4; or a perceived emotional characteristic corresponding to the mood of the respective media content item 4; or an associated characteristic corresponding to metadata, online editorial data, geographical data, popularity, or trending score associated with the respective media content item 4.
In an embodiment the number *n* of feature values 6A ranges from 1 to 256, more preferably from 1 to 100, more preferably from 1 to 34. Most preferably the number *n* of feature values 6A is 34.

In a preferred embodiment, the media content items 4 are musical segments, and each associated feature vector *V_{f}* consists of 34 feature values 6A corresponding to individual musical qualities of the respective musical segment. Each of these feature values 6A can take a discrete value from 1 to 7, indicating the degree of intensity of a specific feature, whereby the value 7 represents the maximum intensity and the value 1 represents the absence of that feature in the musical segment. The 34 feature values 6A in this exemplary embodiment correspond to a number of moods (such as 'Angry', 'Joy', or 'Sad'), a number of musical genres (such as 'Jazz', 'Folk', or 'Pop'), and a number of stylistic features (such as 'Beat Type', 'Sound Texture', or 'Prominent Instrument').
In a possible embodiment the feature values 6A of the feature vectors *V_{f}* for the media content items 4 may be determined by extracting the audio signal from each media content item 4 and subjecting the whole audio signal, or at least one of its representative segments, to a computer-based automated musical analysis process that may comprise a machine learning engine pre-trained for the extraction of high-level audio features.

The client device 1 comprises a display screen 22 that displays a graphical user interface (GUI) 8. A user interface (UI) is a space where interactions between human users and electronic devices occur. A graphical user interface (GUI) is a form of user interface that allows users to interact with electronic devices through graphical icons and visual indicators instead of text-based user interfaces, typed command labels or text navigation. The actions in a GUI are performed through direct manipulation of graphical user interface (GUI) elements.
The GUI 8 comprises a number *m* of GUI elements 9, wherein the number *m* of GUI elements 9 is less than the number *n* of feature values 6A. Each GUI element 9 graphically represents a variable 7 (shown on Fig. 1 as e₁ ... eₘ) wherein one variable 7 can be associated with one or more of the feature values 6A.
In a next step, a user interaction is detected with one or more of the GUI elements 9 through an input interface 20 of the client device 1. In some embodiments, the input interface 20 is a touch-sensitive display (also known as a "touch screen" or "touch screen display"). In some embodiments, the input interface 20 is a touchpad. In some embodiments, the client device 1 has both a display screen 22 and a touch-sensitive surface. In some embodiments, the user interacts with the GUI 8 primarily through finger contacts and gestures on the touch-sensitive display or surface.
The user interaction can then be interpreted as a change in the variable (s) 7 represented by the GUI element (s) (the changed variable shown on Fig. 1 as e₂ᵥ).
In a next, optional step, an input vector *Vᵢ* is determined, based on the user interaction. The input vector *Vᵢ* comprises input values 6B (shown on Fig. 1. as x₁, x₂ ... xₙ). Once determined on the client device 1, the input vector *Vᵢ* can then be communicated to the server device 2.
In one embodiment, the input vector *Vᵢ* comprises input values 6B directly corresponding to the feature values 6A of the feature vector *V*_{*f*.}
In an embodiment, each of the feature values 6A and input values 6B is an integer number, preferably a positive integer number.
In an embodiment, the feature values 6A and input values 6B may range from 1 to 100, more preferably from 1 to 10. In a preferred embodiment, the feature values 6A and input values 6B have a value range between 1 and 7.
In a next, optional step, a playlist 10 of the plurality of media content items 4 is determined on the server device 2.
The term 'playlist' in this context is meant to be interpreted as an ordered list of media content items, such as music tracks.
The playlist 10 is determined by ranking the associated feature vectors *V_{f}* of each media content item 4 based on their distances from the input vector *Vᵢ* in the vector space.
In a possible embodiment the distance of each feature vector *V_{f}* with respect to the input vector *Vᵢ* is determined by calculating their respective pairwise (Euclidean) distances in the vector space, whereby the shorter pairwise (Euclidean) distance represents a higher degree of similarity between the respective vectors.
In a further possible embodiment, the respective pairwise distances between the feature vectors *Vf* and the input vector *Vᵢ* are calculated with the inclusion of an optional step whereby Dynamic Time Warping is applied between the vectors.

Similarly as above, the shorter pairwise (Euclidean) distance represents a higher degree of similarity between the respective vectors.
In a next step, a queue of selectable items 11 is displayed on the GUI 8 of the client device 1 as a direct response to the user interaction detected through the input interface 20. The queue of selectable items 11 can be displayed on the GUI 8 alone, or alongside the number *m* of GUI elements 9. The queue of selectable items 11 can be ordered either directly according to their associated feature vectors *V_{f}* with respect to the changed variable (s) 7 (e.g. by ranking the feature vectors *V_{f}* based on how close their respective associated feature values, such as x₂, are to the changed variable, such as e₂ᵥ), or indirectly according to the playlist 10.

Fig. 2 illustrates the connection between GUI elements 9 displayed on the GUI, the variables 7, and the input values 6B of the input vector *Vᵢ* in accordance with the present disclosure. Each GUI element 9 graphically represents a variable 7 referred to on Fig. 2 as e₁ ... eₘ, wherein the variable 7 affected by the user interaction is referred as e₂ᵥ. In an embodiment, the value of a variable 7 is in direct correlation with one specific input value 6B in the input vector *Vᵢ*. However, in other embodiments the value of one variable 7 can be in direct correlation with multiple input values 6B. Thus, as shown in Fig.2, the change in the value of a variable 7 may affect one or more input values 6B and can thus influence the input vector *Vᵢ* to a smaller or larger extent.

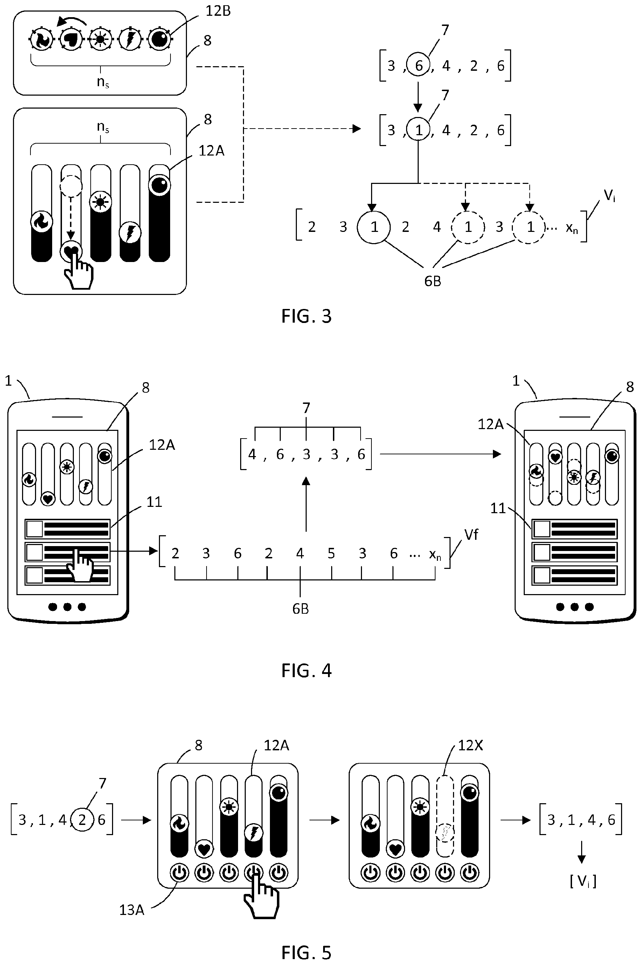

Fig. 3 illustrates the connection between GUI elements 9 and the input vector *Vᵢ* in accordance with the present disclosure, wherein the number *m* of GUI elements 9 comprises a number *nₛ* of gradual adjustment elements 12 movable between two end positions. In an embodiment the number *nₛ* of gradual adjustment elements 12 ranges from 1 to 10, more preferably from 1 to 5. In a preferred embodiment the number *nₛ* of gradual adjustment elements 12 is 5.
In one embodiment the gradual adjustment elements 12 comprise at least one slider 12A movable by dragging between two end points along a vertical or horizontal axis. A slider 12A includes a fixed part (slider bar) and a movable part (slider button), whereby the slider bar indicates the range of a numerical value that can be set by the slider button, which can be moved in the range of the slider bar, as will be explained below. A numerical value can be set by moving the slider button along the slider bar. A slider button can be moved e.g. on a touch screen by touching the slider button with a fingertip and sliding the fingertip while keeping touching the slider button. Such operation is referred to as "dragging" a slider. The variation amount of a set value per unit moving distance of a slider button is decided roughly by the length of a slider bar and the range of a numerical value that can be set. For this reason, the shorter the length of a slider bar which can be indicated is due to restriction of the size of a display screen 22, the larger a variation amount of a slider 12A per unit moving distance becomes. Similarly, the wider the range of a numerical value that can be set, the larger a variation amount of a slider 12A per unit moving distance becomes.

In another possible embodiment the gradual adjustment elements 12 comprise at least one rotatable knob 12B movable by rotating clockwise or counter-clockwise between two extreme positions. The movement can be initiated by a user through a pointing device or by touch input through a touch screen. Thus, the user can use a mouse or a fingertip to rotate a knob 12B as desired.
The position of a gradual adjustment element 12 (be it a slider 12A or a knob 12B) relative to its end positions represents the value of the variable 7 represented by the gradual adjustment element.
In a possible embodiment, at least one of the number *nₛ* of gradual adjustment elements 12 (slider 12A or knob 12B) represents a variable 7 that is associated with exactly one feature value 6A.
In another possible embodiment, at least one of the number *nₛ* of gradual adjustment elements 12 (slider 12A or knob 12B) represents a variable 7 that is associated with a plurality of feature values 6A.
As shown on Fig.3, the user interaction results in moving a gradual adjustment element 12 to a new position (either by dragging a slider 12A downwards along a vertical axis, or by turning a knob 12B counter-clockwise), thereby decreasing the value of its associated variable 7 from 6 to 1. As explained above, this change in the variable 7 then affects the associated input values 6B, resulting in a new input vector *Vᵢ*, which then serves as a basis for ranking the feature vectors *V_{f}* and ultimately for determining the playlist 10.
In a preferred embodiment illustrated in Fig. 3, the GUI 8 comprises five gradual adjustment elements 12 (sliders 12A or knobs 12B), each representing a different musical/emotional quality: 'Sensual', 'Tender', 'Happy', 'Angry', and 'Tempo'. These qualities are expressed with the use of representative icons, as illustrated in the figure. Moving the slider 12A or knob 12B associated with the quality 'Tender' for example will affect, through the change in the respective variable 7, the input values 6B of the input vector *Vᵢ* associated with tenderness, which in turn will result in a more or less tender playlist 10 comprising media content items 4 with associated feature vectors *V_{f}* whereby the respective feature values 6B are closer to these changed input values 6A.

Fig. 4 illustrates the connection between graphical user interface elements and feature vectors in accordance with the present disclosure. In this implementation, after a user initiates playback (through an interaction with a input interface 20, such as a finger tap) of one media content item 4 from a queue of selectable items 11 previously generated on the client device 1, each gradual adjustment element 12 (slider 12A or knob 12B) is adjusted to display variable 7 values corresponding to the feature values 6A of the feature vector *V_{f}* associated with the media content item 4 being selected for playback.

Fig. 5 illustrates a further aspect of the graphical user interface elements in accordance with the present disclosure, wherein the GUI 8 further comprises switch buttons 13A associated with at least one GUI element 9. In a preferred embodiment illustrated on Fig. 5, each slider 12A has an associated switch button 13A provided therewith on the GUI 8. Once a user gesture (such as a tap) is detected in the area of a switch button 13A, it turns a previously active slider 12A on the GUI 8 into an inactive slider 12X, thereby excluding its associated variable 7 from the set of variables 7 taken into account when determining the input vector *Vᵢ*. In case a user gesture is detected in relation with a switch button 13A associated with a previously inactive slider 12X, the inactive slider 12X becomes an active slider 12A and its related variable 7 is taken into account again when determining the input vector *Vᵢ*.

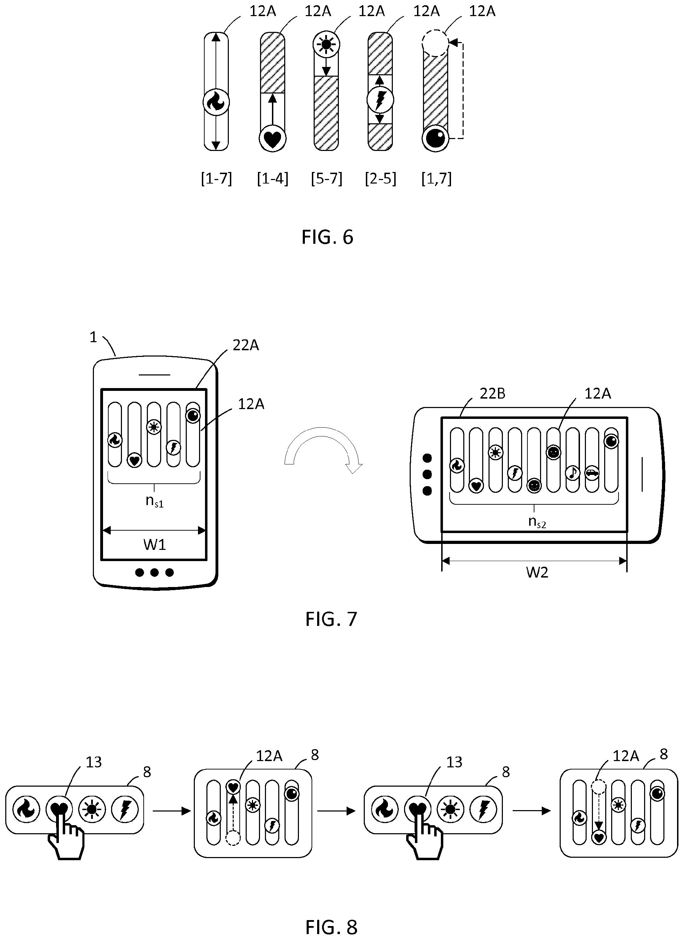

Fig. 6 illustrates a further aspect of the graphical user interface elements in accordance with the present disclosure, wherein a gradual adjustment element 12 (slider 12A or knob 12B) may have a limited range of movement between its end positions. In an embodiment this limited range is a continuous but shorter range between the end positions, wherein in another possible embodiment the limited range is embodied as a set of available positions, while other positions are unavailable and are thus skipped when moving the respective slider 12A or knob 12B.
In an exemplary embodiment shown on Fig. 6, the first slider 12A can be dragged vertically without any limitations between the end points, which can also be defined numerically as the available range of values [1-7] of its related variable 7. The second, third, and fourth sliders 12A are each limited to different ranges, expressed by their respective available ranges of values [1-4], [5-7], [2-5]. The movement of the fifth slider 12A is limited to two positions, which in this case are the end positions [1,7], whereby the positions in between are skipped when moving the slider.

Fig. 7 illustrates the connection between graphical user interface elements and the dimensions and/or orientation of the display screen in accordance with the present disclosure. In this implementation, the number *nₛ* of gradual adjustment elements 12 is adjusted to fit the limitations of the display screen 22 of the client device 1. As shown in the example illustrated on Fig. 7, a first display screen 22A has a first width W1, which results in a first number *nₛ₁* of sliders 12A displayed on the GUI 8. On a second display screen 22B that has a second width W2 (which may also be the same display screen 22A rotated by 90 degrees into landscape mode) the GUI 8 comprises a second number *nₛ₂* of sliders 12A. In case the second width W2 is larger than the first width W1, the respective second number *nₛ₂* of sliders 12A (or knobs 12B) is also proportionally larger. In another possible embodiment, wherein the sliders 12A are vertical, the same as above applies with respect to the vertical dimensions (height) of the display screen.

Fig. 8 illustrates the connection between different types of graphical user interface elements in accordance with the present disclosure. In this implementation the GUI 8 comprises at least one quick button 13 alongside a number m of GUI elements 9, which may be gradual adjustment elements 12 (sliders 12A or knobs 12B). The quick button 13 may be associated with one or more of the GUI elements 9, such as gradual adjustment elements 12, displayed on the GUI. As shown in the example illustrated on Fig. 8, upon first detecting a user interaction with a quick button 13, the slider 12A associated with the quick button 13 is adjusted to display a minimum value of the variable 7 represented by the slider 12A, which effectively translates to the respective slider 12A moving to the (highest) end position related to the maximum value.
When detecting repeated user interaction with the same quick button 13, the slider 12A associated with the quick button 13 is adjusted to display a minimum value of the variable 7 represented by the slider 12A, which effectively translates to the respective slider 12A moving to the (lowest) end position related to the minimum value. In other words, the alternating between two displayed predetermined values, e.g. a minimum or a maximum value, of the variable 7 represented by the GUI element 9 associated with the selected quick button 13 is based on detecting repeated user interaction with the same quick button 13.

Fig. 9 shows a flow diagram illustrating a method in accordance with the present disclosure, wherein the number m of GUI elements 9 comprises at least one interactive reference 14 to at least one of the plurality of media content items 4. In a first step, after detecting a user interaction with an interactive reference 14, a seed media content item 5 is identified. The seed media content item 5 is selected from the plurality of media content items 4 as being closest associated with the interactive reference 14. The association can be based on previously established relationships (such as metadata, release date, language, etc.), whereby these relationships can be determined manually or automatically.
In a next step, the media content items 4 are ordered to be displayed in a queue on the GUI 8 according to their similarity to the seed media content item 5. This similarity is preferably based on their associated feature vectors *V*_{*f*.}

In an embodiment, once the seed media content item 5 is identified, the feature values 6A of the feature vector *V_{f}* of the seed media content item 5 are assigned as the input values 6B of the input vector *Vᵢ*. In other words, the respective feature vector *V_{f}* is used as the input vector *Vᵢ*. This input vector *Vᵢ* is then used, as described above in detail, to determine a playlist 10 which then serves as basis for a queue of selectable items 11 to be displayed on the GUI 8 of the client device 1 either alone, or alongside the selected interactive reference 14.

Figs. 10A-10F show graphical user interfaces illustrating different possible embodiments of interactive references 14. In one possible embodiment shown on Fig. 10A the interactive reference 14 is a textual reference to a piece of metadata 14A comprising artist name and track title, which is directly associated with at least one of the plurality of media content items 4. The user can select an artist name or track title on the GUI 8, which then results in determining a playlist 10 comprising media content items 4 with an associated artist name or track title according to the selected textual reference 14A.
In one further possible embodiment shown on Fig. 10B the interactive reference 14 is a textual reference to another piece of metadata 14A comprising a date, such as release date, which is directly associated with at least one of the plurality of media content items 4. The user can select a date range on the GUI 8, which then results in determining a playlist 10 comprising media content items 4 with an associated release date within the specified range.

In the further possible embodiments shown on Fig. 10C and 10D the interactive reference 14 is a textual reference to another piece of metadata 14A comprising a music genre or tag, which is directly associated with at least one of the plurality of media content items 4. The user can select music genre or tag on the GUI 8, which then results in determining a playlist 10 comprising media content items 4 with an associated music genre or tag according to the selected textual reference 14A. In one further possible embodiment shown on Fig. 10E the interactive reference 14 is a graphical or textual reference to a user ID 14B, such as a profile picture or username, wherein the user ID is associated with at least one of the plurality of media content items 4. The association can be based on the user history recorded under the respective user ID, such as listening (in case of music) or watching (in case of videos) history of media content items 4 on a local device, on a media streaming service, or obtained from a 3^{rd} party service. The user can select a profile picture or username on the GUI 8, which then results in determining a playlist 10 comprising media content items 4 associated with the respective user ID.
In one further possible embodiment shown on Fig. 10F the interactive reference 14 is a graphical reference to a location 14C, such as a region of an interactive map, wherein the location is associated with at least one of the plurality of media content items 4. The user can specify a location on the GUI 8 (either by searching for a specific place, such as the city of Copenhagen, or using an interactive map element) and, optionally, setting a radius defining a region on the map around the set location. This then results in determining a playlist 10 comprising media content items 4 associated with the selected location or region based on, for example, textual references in the lyrics of a music track, or a specific language of a music or audio track - however the association can be much less direct, based solely on e.g. a certain mood associated with the selected location (e.g. "rainy" for London).

Fig. 11 shows a flow diagram illustrating a further aspect combining different graphical user interface elements in accordance with the present disclosure.
In a first step a GUI 8 is presented on the display screen 22 of the client device 1 comprising gradual adjustment elements 12 (which in this example are sliders 12A but can also be knobs 12B) alongside with an indicator for adding a further GUI element 9, such as an interactive reference 14 in the form of a graphical or textual reference to a user ID 14B. In a next step, after the user interacts with the indicator, the GUI displays a set of selectable graphical or textual references to user IDs 14B.
In a next step, after the user interacts with one (or more) of the graphical or textual references to user IDs 14B, the first screen is presented again, but with the selected user ID reference 14B now also displayed alongside the sliders 12A, and another indicator signaling the recalculation of the playlist 10.
In a next step, after the playlist 10 is recalculated, a queue of selectable items 11 are displayed on the GUI 8 according to the recalculated playlist 10.
The playlist recalculation in this case takes into account both the initial values of variables 7 as presented by the sliders 12A on the first screen (and expressed also by the initial queue of selectable items 11), as well as the media content items 4 associated with the respective user ID. In a possible embodiment the media content items 4 associated with the respective user ID can serve as a new starting pool, whereby the media content items 4 in the pool are ranked according to the values of variables 7 as presented by the sliders 12A. However, further calculation methods are also possible, whereby the values of variables 7 as presented by the sliders 12A determine an starting pool, and media content items 4 therein are ranked according to their similarities to the media content items 4 associated with the respective user ID.
In a possible embodiment any particular combination of GUI elements 9 and their set values (such as values of variables 7 as presented by sliders 12A and a selected user ID) can be saved as a 'flavor' on a local storage 16 on the client device 1 itself or on a remote server 2. This 'flavor' can then be used as a separate entity to be copied and shared between users 25 for dynamically generating playlists from different databases 3 of media content items 4, as well as from the same database 3 after an (automatic) update of media content items 4.
In a possible embodiment the resulting playlists 10 can (also) be saved on a local storage 16 on the client device 1 itself or on a remote server 2 to be re-used (e.g. to serve as a starting pool for further playlist calculations) or shared between users 25.

Fig. 12 shows a schematic view of an illustrative computer-based system 15 in accordance with the present disclosure, wherein the system 15 comprises a client device 1 and a server device 2 in data communication with each other via a computer network 24.
In some embodiments, the system 15 includes multiple servers 2, multiple client devices 1, or both multiple servers 2 and multiple client devices 1. To prevent overcomplicating the drawing, only one server 2 and one client device 1 are illustrated.
The client device 1 may in an embodiment be a portable media player, a cellular telephone, pocket-sized personal computer, a personal digital assistant (PDA), a smartphone, a desktop computer, a laptop computer, and any other device capable of communicating via wires or wirelessly (with or without the aid of a wireless enabling accessory device).
The server 2 may include any suitable types of servers that are configured to store and provide data to a client device 1 (e.g., file server, database server, web server, or media server). The server 2 can store media and other data (e.g., digital audio signals of musical compositions, or metadata associated with musical compositions), and the server 2 can receive data download requests from the client device 1.
The server 2 can communicate with the client device 1 over a communications link which can include any suitable wired or wireless communications link, or combinations thereof, by which data may be exchanged between server 2 and client 1. For example, the communications link can include a satellite link, a fiber-optic link, a cable link, an Internet link, or any other suitable wired or wireless link. The communications link is in an embodiment configured to enable data transmission using any suitable communications protocol supported by the medium of the communications link. Such communications protocols may include, for example, Wi-Fi (e.g., a 802.11 protocol), Ethernet, Bluetooth (registered trademark), radio frequency systems (e.g., 900 MHz, 2.4 GHz, and 5.6 GHz communication systems), infrared, TCP/IP (e.g., and the protocols used in each of the TCP/IP layers), HTTP, BitTorrent, FTP, RTP, RTSP, SSH, any other communications protocol, or any combination thereof.
There is further provided a database 3 comprising a plurality of media content items 4, as explained above in detail, whereby the database 3 may be part of, or in data communication with, the client device 1 and/or the server device 2. The database can also be a separate entity in data communication with the client device 1.
The client device 1 can include a storage medium 16, a processor 17, a memory 18, a communications interface 19, an input interface 20, an audio interface 21, a display screen 22, and an internal bus 23. The client device 1 can include other components not shown in Fig. 12, such as a power supply for providing power to the components of the computer-based system. Also, while only one of each component is illustrated, the computer-based system 15 can include more than one of some or all of the components.
A storage medium 16 stores information and instructions to be executed by the processor 18. The storage medium 16 can be any suitable type of storage medium offering permanent or semi-permanent memory. For example, the storage medium 16 can include one or more storage mediums, including for example, a hard drive, Flash, or other EPROM or EEPROM.
A processor 17 controls the operation and various functions of the device 1 and/or the whole system 15. As described in detail above, the processor 17 can be configured to control the components of the computer-based system 15 to execute a method of organizing media content into a playlist, in accordance with the present disclosure. The processor 17 can include any components, circuitry, or logic operative to drive the functionality of the computer-based system 15. For example, the processor 17 can include one or more processors acting under the control of an application.
In some embodiments, the application can be stored in a memory 18. The memory 18 can include cache memory, flash memory, read only memory, random access memory, or any other suitable type of memory. In some embodiments, the memory 18 can be dedicated specifically to storing firmware for a processor 17. For example, the memory 18 can store firmware for device applications.
An internal bus 23 may provide a data transfer path for transferring data to, from, or between a storage medium 16, a processor 17, a memory 18, a communications interface 19, and some or all of the other components of the device 1 and/or the computer-based system 15.
A communications interface 19 enables the device 1 to communicate with other devices, such as the server 2, either directly or via a computer network 24. For example, communications interface 19 can include Wi-Fi enabling circuitry that permits wireless communication according to one of the 802.11 standards or a private network. Other wired or wireless protocol standards, such as Bluetooth, can be used in addition or instead.
An input interface 20, audio interface 21, and display screen 22 provides a user interface for a user 25 to interact with the device 1.
The input interface 20 may enable a user to provide input and feedback to the device 1. The input interface 20 can take any of a variety of forms, such as one or more of a button, keypad, keyboard, mouse, dial, click wheel, touch screen, or accelerometer.
An audio interface 21 provides an interface by which the device 1 can provide music and other audio elements to a user 25. The audio interface 21 can include any type of speaker, such as computer speakers or headphones.
A display screen 22 can present visual media and can be configured to show a GUI 8 to the user 25. A display screen 22 can include, for example, a liquid crystal display, a touchscreen display, or any other type of display.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope.

## Claims

1. A method of organizing media content on a computer-based system to form a playlist, the method comprising:
providing a server device (2), and a client device (1) in data communication with said server device (2);
providing, on said server device (2), a database (3) comprising a plurality of media content items (4), each of said media content items (4) having associated therewith a feature vector *V_{f}* comprising a number *n* of feature values (6A), each of said feature values (6A) representing one characteristic of the media content item (4) concerned;
displaying, on a display screen (22) of said client device (1), a graphical user interface, GUI (8), comprising a number *m* of GUI elements (9), each of said GUI elements (9) graphically representing a variable (7) associated with one or more of said feature values (6A);
said number *m* of GUI elements (9) being less than said number *n* of feature values (6A);
detecting, through an input interface (20) of said client device (1), a user interaction with one of said GUI elements (9);
determining, on said client device (1), an input vector *Vᵢ* comprising input values (6B) based on said user interaction;
communicating said input vector *Vᵢ* to said server device (2) ;
determining, on said server device (2), a playlist (10) of said plurality of media content items (4) based on the distance of the associated feature vector *V_{f}* of each media content item (4) from said input vector *Vᵢ* in the vector space; and
displaying, on said GUI (8) of the client device (1), as a direct response to said user interaction, a queue of selectable items (11) according to said playlist (10).

2. A method according to claim 1, wherein one or more of the input values (6B) of said input vector *Vᵢ* are in direct correlation with the value of the variable (7), or the change in the value of the variable (7) represented by the GUI element (9) affected by said user interaction, and wherein
preferably said input values (6B) directly correspond to said feature values (6A).

3. A method according to any one of claims 1 or 2, wherein said number m of GUI elements (9) comprises a number *nₛ* of gradual adjustment elements (12) movable between two end positions; wherein
the position of a gradual adjustment element (12) relative to its end positions represents the value of the variable (7) represented by said gradual adjustment element; wherein said gradual adjustment elements (12) comprise at least one of a slider (12A) movable by dragging between two end points along a vertical or horizontal axis, or a rotatable knob (12B) movable by rotating clockwise or counter-clockwise between two extreme positions; and wherein
said user interaction results in moving at least one of said gradual adjustment elements (12) to a new position.

4. A method according to claim 3, wherein at least one of said number *nₛ* of gradual adjustment elements (12) represents a variable (7) that is associated with either exactly one feature value (6A), or with a plurality of feature values (6A).

5. A method according to any one of claims 3 or 4, further comprising:
initiating playback, on said client device (1), of one of said media content items (4) from said queue of selectable items (11), and
adjusting each of said number *nₛ* of gradual adjustment elements (12) to display variable (7) values corresponding to the feature values (6A) of the feature vector *V_{f}* associated with said media content item (4) being played back.

6. A method according to any one of claims 3 to 5, wherein said number *nₛ* of gradual adjustment elements (12) is 1 ≤ *nₛ* ≤ 10, more preferably 1 ≤ *nₛ* ≤ 5, more preferably *nₛ* = 5.

7. A method according to any one of claims 3 to 6, further comprising:
detecting the physical dimensions of said display screen (22) of said client device (1), and
adjusting said number *nₛ* of said gradual adjustment elements (12) to fit the limitations of said display screen (22).

8. A method according to any one of claims 1 to 7, wherein said number *m* of GUI elements (9) further comprises at least one quick button (13), the method further comprising:
upon detecting user interaction with a quick button (13), adjusting a GUI element (9) associated with said quick button (13) to display a predetermined (e.g. minimum or maximum) value of the variable (7) represented by said GUI element (9); and
determining said input vector *Vᵢ* based at least partly on said predetermined value of said variable (7).

9. A method according to claim 8, wherein
adjusting said GUI element (9) associated with said quick button (13) alternatingly changes between two predetermined values (e.g. the maximum and the minimum value) of said variable (7) upon repeated detection of user interaction with the same quick button (13).

10. A method according to any one of claims 1 to 9, wherein said number *m* of GUI elements (9) comprises at least one interactive reference (14) to at least one of said plurality of media content items (4); and wherein determining said input vector *Vᵢ* comprises identifying a seed media content item (5) closest associated with the interactive reference (14) selected via said user interaction, and assigning the feature values (6A) of the feature vector *V_{f}* of said seed media content item (5) as the input values (6B) of the input vector *Vᵢ*.

11. A method according to claim 10, wherein said interactive reference (14) is one of
a textual reference to a piece of metadata (14A) directly associated with at least one of said plurality of media content items (4) (such as artist name, track title, music genre, tag, release date);
a graphical or textual reference to a user ID (14B) (such as a profile picture or username), wherein said user ID is associated with at least one of said plurality of media content items (4);
a graphical reference to a location (14C) (such as a region of an interactive map), wherein said location is associated with at least one of said plurality of media content items (4); or
a textual reference indirectly associated with at least one of said plurality of media content items (4) (such as a brand name, an ideology, or a title of a book, a movie, or a TV show).

12. A method according to any one of claims 1 to 11, wherein said number *n* of feature values is 1 ≤ *n* ≤ 256, more preferably 1 ≤ *n* ≤ 100, most preferably 1 ≤ *n* ≤ 34; and wherein each of said feature values (6A) and input values (6B) is preferably an integer number, more preferably a positive integer number, most preferably a positive integer number with a value ranging from 1 to 7.

13. A method according to any one of claims 1 to 12, wherein said characteristic represented by a feature value (6A) is one of
a perceived musical characteristic corresponding to the style, genre, sub-genre, rhythm, tempo, vocals, or instrumentation of the respective media content item (4);
a perceived emotional characteristic corresponding to the mood of the respective media content item (4); or
an associated characteristic corresponding to metadata, online editorial data, geographical data, popularity, or trending score associated with the respective media content item (4).

14. A device for organizing media content to form a playlist, said device having access to a database (3) comprising a plurality of media content items (4), each of said media content items (4) having associated therewith a feature vector *V_{f}* comprising a number *n* of feature values (6A), each value representing one characteristic of the media content item (4) concerned, the device comprising:
a display screen (22); and
a processor (17) being configured to display a graphical user interface, GUI (8), on said display screen (22), said GUI (8) comprising a number m of GUI elements (9), each of said GUI elements (9) graphically representing a variable (7) associated with one or more of said feature values (6A);
wherein said number *m* of GUI elements (9) is less than said number *n* of feature values (6A); and
wherein the processor (17) is further configured to interpret a user interaction with one of said GUI elements (9) as a change in the variable (7) represented by said GUI element, and to
display on the GUI (8), in response to said user interaction, a queue of selectable items (11) ordered according to their associated feature vectors *V_{f}* with respect to said changed variable (7).

15. A device according to claim 14, wherein the processor (17) is configured to interpret a user interaction with one of said GUI elements (9) as an input vector *Vᵢ*, wherein one or more of the input values (6B) of said input vector *Vᵢ* are in direct correlation with the value of the variable (7), or the change in the value of the variable (7) represented by the GUI element (9) affected by said user interaction; and to
display on the GUI (8), in response to said user interaction, a queue of selectable items (11) according to the distance of the associated feature vectors *V_{f}* of said media content items (4) from said input vector *Vᵢ* in the vector space; wherein said input vector *Vᵢ* preferably comprises input values (6B) directly corresponding to the feature values (6A) of said feature vector *V*_{*f*.}

16. A computer-based system (15) for organizing media content to form a playlist, said system comprising:
a server device (2), having thereon provided a database (3) comprising a plurality of media content items (4), each of said media content items (4) having associated therewith a feature vector *V_{f}* comprising a number *n* of feature values (6A), each of said feature values (6A) representing one characteristic of the media content item (4) concerned; and
a client device (1) according to any one of claims 14 or 15, said client device (1) being in data communication with said server device (2).

17. A non-transitory computer readable medium storing instructions which, when executed by one or more processors (17), cause the one or more processors (17) to perform a method according to any one of claims 1 to 13.

18. A non-transitory computer readable medium storing instructions which, when executed by one or more processors (17), cause the one or more processors (17) to display, on a display screen (22) of a (client) device (1), a graphical user interface, GUI (8), according to the GUI (8) of any one of claims 1 to 13.

19. A non-transitory computer readable medium according to claim 18, wherein said one or more processors (17) are part of said (client) device (1).
